# EUROPÄISCHE PATENTANMELDUNG

(11) **EP 1 956 037 A1**
(43) Veröffentlichungstag der Anmeldung: **13.08.2008**
(21) Anmeldenummer: 08151213.9
(22) Anmeldetag: 08.02.2008
(51) Int. Cl.: C08G 65/12, C08G 65/24, C08G 65/18

(54) **Verfahren zur anionischen Polymerisation von Epoxiden und Oxetanen**

(30) Priorität: 09.02.2007 EP 07102075
(71) Anmelder: BASF SE, 67056 Ludwigshafen (DE)
(72) Erfinder: Desbois, Philippe, Dr., 68535 Edingen-Neckarhausen (DE); Schade, Christian, Dr., 67063 Ludwigshafen (DE); Deffieux, Alain, Dr. Prof., 33000 Bordeaux (FR); Carlotti, Stéphane, Dr., 33400 Talence (FR); Labbe, Amelie, 33400 Talence (FR); Rejsek, Virginie, 33000 Bordeaux (FR)
(74) Vertreter: Isenbruck, Günter

(57) **Zusammenfassung**

Die Herstellung von Homo- oder Copolymeren aus von Ethylenoxid und Propylenoxid verschiedenen Epoxiden oder Oxetanen, oder von Copolymeren aus von Ethylenoxid und Propylenoxid verschiedenen Epoxiden oder Oxetanen und Comonomeren erfolgt durch anionische Polymerisation, bei der man in Gegenwart einer quartären Ammonium- und/oder Phosphoniumverbindung und/oder Alkalimetallverbindung und in Gegenwart eines einkernigen Aluminiumorganyls der Formel R₃-Al, wobei die Reste R unabhängig voneinander Wasserstoff, Halogen, C₁₋₂₀-Alkyl, -O-C₁₋₂₀-Alkyl, -OH, C₆₋₂₀-Aryl oder C₇₋₂₀-Arylalkyl bedeuten, polymerisiert.

## Beschreibung

Die Erfindung betrifft ein Verfahren zur Herstellung von Homo- oder Copolymeren aus von Ethylenoxid und Propylenoxid (Oxiranen) verschiedenen Epoxiden oder Oxetanen oder von Copolymeren aus von Ethylenoxid und Propylenoxid (Oxiranen) verschiedenen Epoxiden oder Oxetanen und Comonomeren, durch anionische Polymerisation, wobei man in Gegenwart einer quartären Ammonium- und/oder Phosphoniumverbindung und/oder Alkalimetallverbindung und eines einkernigen Aluminiumorganyls der Formel R₃-Al, wobei die Reste R unabhängig voneinander Wasserstoff, Halogen, C₁₋₂₀-Alkyl, -O-C₁₋₂₀-Alkyl, -OH, C₆₋₂₀-Aryl oder C₇₋₂₀-Arylalkyl bedeuten, polymerisiert.

Unter Oxiranen sollen Epoxide einfacher Struktur verstanden werden, nämlich Ethylenoxid (EO), auch als Oxiran bezeichnet, und Propylenoxid (PO) auch als Methyloxiran bezeichnet. Siehe auch CD Römpp Chemie Lexikon, Version 1.0, Thieme Verlag Stuttgart, 1995 (nachfolgend als Römpp zitiert), Stichwort "Oxirane". Als Oxiran-Polymere sind insbesondere Polyethylenoxid (PEO) und Polypropylenoxid (PPO) zu nennen.

Unter Epoxiden wird eine Gruppe von reaktiven organischen Verbindungen verstanden, die die Epoxid-Gruppierung enthalten, siehe Römpp Chemielexikon, Stichwort "Epoxide".

Bei von Oxiranen verschiedenen Epoxiden handelt es sich insbesondere um Epoxide ausgenommen Ethylenoxid und Propylenoxid. Die Epoxide sind dabei längerkettig als Ethylenoxid oder Propylenoxid und weisen einen komplexeren Aufbau auf. Das einfachste derartige Epoxid ist Epichlorhydrin.

Verfahren zur anionischen Polymerisation von Oxiranen sind bekannt. Beispielsweise beschreibt die WO 2005/044896 die anionische Polymerisation von Oxiranen wie Ethylenoxid oder Propylenoxid in Gegenwart einer quartären Ammonium- und/oder Phosphoniumverbindung und eines einkernigen Aluminiumorganyls als Katalysator.

Die WO 2004/104068 offenbart ein Verfahren zur Herstellung von Homopolymeren und Copolymeren aus Oxiranen durch anionische Polymerisation in Gegenwart einer Alkalimetallverbindung und eines Aluminiumorganyls, wobei bei der Polymerisation keine Kronenether und keine Kryptanden mitverwendet werden.

Entsprechende Umsetzungen sind auch in Macromol. Symp. 2005, 226, Seiten 61 bis 68 und Macromolecules 2004, 37, Seiten 4038 bis 4043 beschrieben.

Aufgabe der vorliegenden Erfindung ist die Bereitstellung eines Verfahrens zur schnellen und steuerbaren Polymerisation und Copolymerisation von Epoxiden oder Oxetanen, insbesondere von Glycidylethern, Glycidylmethacrylat und Epichlorhydrin. Die Polymerisation soll hohe Molekulargewichte zugänglich machen.

Die Aufgabe wird erfindungsgemäß gelöst durch ein Verfahren zur Herstellung von Homo- oder Copolymeren aus von Ethylenoxid und Propylenoxid verschiedenen Epoxiden oder Oxetanen, oder von Copolymeren aus von Ethylenoxid und Propylenoxid verschiedenen Epoxiden oder Oxetanen und Comonomeren, durch anionische Polymerisation, wobei man in Gegenwart einer quartären Ammonium- und/oder Phosphoniumverbindung und/oder Alkalimetallverbindung und in Gegenwart eines einkernigen Aluminiumorganyls der Formel R₃-Al, wobei die Reste R unabhängig voneinander Wasserstoff, Halogen, C₁₋₂₀-Alkyl, -O-C₁₋₂₀-Alkyl, -OH, C₆₋₂₀-Aryl oder C₇₋₂₀-Arylalkyl bedeuten, polymerisiert.

Zudem wird die Aufgabe erfindungsgemäß gelöst durch nach dem Verfahren erhältliche Polymere.

Ferner wird die Aufgabe erfindungsgemäß gelöst durch Homo- oder Copolymere, die von Ethylenoxid und Propylenoxid verschiedene polymerisierte Grundbausteine der nachstehenden allgemeinen Formel (I) oder Oxetane enthalten und vorzugsweise ein Zahlenmittel des Molekulargewichts von mindestens 10.000 aufweisen.

Es wurde erfindungsgemäß gefunden, dass die aus WO 2005/044896 und WO 2004/104068 bekannten Katalysatorsysteme in hervorragender Weise zur anionischen Polymerisation von Glycidylethern, Glycidylmethacrylat, Epichlorhydrin und Oxetanen eingesetzt werden können. Das Verfahren führt in unaufwendiger Weise und kurzer Zeit zu Polymeren mit hohen Molekulargewichten mit einem Zahlenmittel von vorzugsweise mindestens 10.000, besonders bevorzugt mindestens 15.000, insbesondere mindestens 30.000.

Die Polymerisationszeiten sollten deutlich kürzer sein als bei den Verfahren des Standes der Technik, wobei eine maximale Polymerisationszeit von 48 Stunden angestrebt wurde. Dabei sollte die kürzere Dauer nicht zu Lasten des erzielten Molekulargewichts gehen. Weiterhin sollten sich mit dem Verfahren Polyepoxide mit höheren Molekulargewichten, verglichen mit dem Stand der Technik, erzielen lassen.

Außerdem bestand die Aufgabe, ein Verfahren bereitzustellen, mit dem sich sowohl Homopolymere als auch Copolymere herstellen lassen. Epoxide sind sehr reaktive Verbindungen, und das Verfahren sollte eine verbesserte Kontrolle und einfachere Steuerung der Epoxidpolymerisation ermöglichen.

Schließlich sollte das Verfahren weniger kompliziert sein als die Verfahren des Standes der Technik und insbesondere mit weniger Reagenzien auskommen. Insbesondere sollten die verwendeten Initiatoren, bzw. Initiatorsysteme und deren Komponenten, einfacher sein als diejenigen des Standes der Technik, und sich auf einfache Weise herstellen lassen.

Bei dem erfindungsgemäßen Verfahren werden durch anionische Polymerisation von Epoxiden verschiedene Epoxide und Oxetane zu Homopolymeren, oder mit Comonomeren zu Copolymeren, polymerisiert. Die Polymerisation erfolgt in Gegenwart einer quartären Ammonium- und/oder Phosphoniumverbindung und/oder Alkalimetallverbindung und in Gegenwart eines einkernigen Aluminiumorganyls.

Als Epoxide sind alle von Oxiranen (Ethylenoxid und Propylenoxid) verschiedenen Epoxide, vorzugsweise ohne kondensierte Ringsysteme, geeignet. Bevorzugt sind die Epoxide ausgewählt aus Verbindungen der allgemeinen Formel (I) oder deren Mischungen.

Insbesondere sind die Epoxide ausgewählt aus Verbindungen der nachstehenden Formel 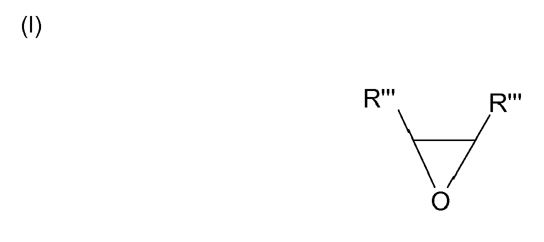 mit der Bedeutung
- R"': jeweils unabhängig Aryl, -O-C₁₋₂₀-Alkyl, Kohlenwasserstoffrest mit einem Zahlenmittel des Molekulargewichts von 150 bis 20000 oder -CH₂-R", wobei einer der Reste R"' auch H bedeuten kann und beide Reste R"' gemeinsam einen C₃-₆-Alkylenrest bilden können,
- R": Cl, Methacrylato, Aryl, Kohlenwasserstoffrest mit einem Zahlenmittel des Molekulargewichts von 150 bis 20000, O-C₁₋₂₀-Alkyl, das durch 1 bis 6 nicht benachbarte Sauerstoffatome unterbrochen sein kann, (OEt)ₓ-OR' oder (OPr)ₓ-OR' mit Et Ethylen, Pr Propylen, x mittlerer Wert von 1 bis 20, R' H oder C₁₋₂₀-Alkyl.
Insbesondere sind die Epoxide ausgewählt aus Verbindungen der nachstehenden Formel 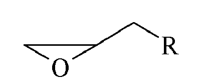
mit der Bedeutung
- R": Cl, Methacrylato, C₆₋₁₂-Aryl, O-C₁₋₁₂-Alkyl, das durch 1 bis 6 nicht benachbarte Sauerstoffatome unterbrochen sein kann, (OEt)ₓ-OR' oder (OPr)ₓ-OR' mit Et Ethylen, Pr Propylen, x mittlerer Wert von 1 bis 20, R' H oder C₁₋₁₂-Alkyl.

Bevorzugt bedeutet R" O-C₁₋₆-Alkyl, besonders bevorzugt O-C₁₋₃-Alkyl. Es kann sich bei R" auch um von Ethylenoxid oder Propylenoxid abgeleitete Reste mit einer mittleren Anzahl an Wiederholeinheiten von 1 bis 20, vorzugsweise 1 bis 10, insbesondere 1 bis 5 handeln. Endständig kann dabei eine Hydroxylgruppe vorliegen, oder die Hydroxylgruppe kann mit einem C₁₋₁₂-Alkylrest, vorzugsweise C₁₋₆-Alkylrest, insbesondere C₁-₃-Alkylrest verethert sein. R" kann auch ein Methacrylato-Rest sein, der sich beispielsweise aus einer Umsetzung von Epichlorhydrin mit Methacrylsäure unter Abspannung von Salzsäure ableiten kann. Beispiele sind Epichlorhydrin (ECH), Butylenoxid, Phenyl-Ethylenoxid (von Styrol abgeleitet), Glycidylmethylether (GME), Glycidylisopropylether (GIPrE), Ethoxyethylglycidylether (EEGE).

Bei den Oxetanen kann es sich um Oxetan oder durch Substitution erhaltene Derivate davon handeln. Beispielsweise können die Oxetane einen oder zwei C₁₋₁₂-Alkylreste, bevorzugt einen C₁₋₆-Alkylrest aufweisen. Auch von Ethylenoxid oder Propylenoxid abgeleitete Reste können im Oxetan vorliegen.

Zur Herstellung der Copolymere kommen als Comonomere andere Epoxide und alle anionisch polymerisierbaren Monomere in Betracht, insbesondere Ethylenoxid, Propylenoxid, Styrolmonomere und Dienmonomere, Vinylpyridin und (Meth)acrylate. Als Styrolmonomere sind alle vinylaromatischen Monomere geeignet, beispielsweise Styrol, α-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Als Dienmonomere kommen alle polymerisierbaren Diene in Betracht, insbesondere 1,3-Butadien (kurz: Butadien), 1,3-Pentadien, 1,3-Hexadien, 2,3-Dimethylbutadien, Isopren, Piperylen oder Mischungen davon. Verwendet man mehrere Oxirane gemeinsam, beispielsweise PO und EO, so erhält man PO-EO-Copolymer-Anteile. Es wurde gefunden, dass PO/EO-Gemische in ähnlicher Weise polymerisieren wie reines PO. Aufgrund dieses ähnlichen Polymerisationsverhaltens kann man einen Teil des PO durch EO ersetzen, ohne die Polymerisationsbedingungen (Verfahrensparameter) wesentlich ändern zu müssen. Dies bringt wirtschaftliche Vorteile, da aufwändige Verfahrensanpassungen entfallen. Außerdem ist EO in der Regel preiswerter als PO.

Geeignete Gemische von PO und EO weisen üblicherweise einen EO-Anteil von 0,1 bis 99,9, insbesondere 10 bis 90 und besonders bevorzugt 20 bis 80 Gew.-% auf, bezogen auf das Gemisch.

Bevorzugt sind die Comonomere ausgewählt aus Ethylenoxid, Propylenoxid, Styrol, α-Methylstyrol, Butadien, Isopren oder deren Mischungen. Besonders bevorzugt ist Styrol.

Sofern Comonomere mitverwendet werden, d.h. sofern Copolymere hergestellt werden, beträgt der Anteil der Comonomeren 0,1 bis 99,9, bevorzugt 0,1 bis 80 und insbesondere 0,1 bis 50 Gew.-%, bezogen auf die Gesamtmonomerenmenge. Weitere Angaben zu den Copolymeren, insbesondere Blockcopolymeren, werden weiter unten gemacht.

Unter quartären Ammoniumverbindungen werden Ammoniumverbindungen verstanden, bei denen alle vier H-Atome des NH₄⁺-lons durch organische Reste R ersetzt sind. Sie weisen bevorzugt die allgemeine Formel I

R¹R²R³R⁴N-X (I)

auf, wobei die Reste R¹, R², R³ und R⁴ gleich oder verschieden sein können. Formel I kann vereinfachend auch als Formel la

NR₄-X (Ia)

geschrieben werden. Es bedeuten
- R¹, R², R³, R⁴, bzw. R:: gleiche oder verschiedene Alkylreste, Arylreste oder Alkylarylreste mit 1 bis 20 C-Atomen, die unsubstituiert oder substituiert sein können, und die O, S, N, P, Si, Halogen oder andere Heteroatome enthalten können, und
- X:: ein anorganischer oder organischer Rest, beispielsweise eine anorganische Gruppierung wie Halogen, Cyanid, Hydroxid oder Hydrogencarbonat, oder eine organische Gruppierung wie Alkoholat (Alkoxid), Amin bzw. Alkylamin, oder Carbonsäurereste wie Formiat, Acetat oder Propionat.

Bevorzugt bedeuten R¹, R², R³ und R⁴, bzw. R, gleiches oder verschiedenes Alkyl mit 1 bis 10 C-Atomen, und X Halogen, OH oder ein Alkoholatrest mit 1 bis 10 C-Atomen. Besonders bevorzugt steht R für gleiche Reste, also R¹ = R² = R³ = R⁴. Besonders bevorzugt ist R gleich Ethyl (Et) oder n-Butyl (nBu), und X ist besonders bevorzugt Cl, OH, Acetat oder Isopropanolat (OiPr).

Besonders bevorzugte quartäre Ammoniumverbindungen sind Tetraethylammoniumisopropanolat NEt₄-OiPr, Tetra-n-butylammonium-isopropanolat NnBu₄-OiPr, Tetra-n-butylammonium-chlorid NnBu₄-Cl, Tetra-n-butylammonium-hydroxid NnBu₄-OH, und Tetra-n-butylammonium-acetat NnBu₄-OOC(CH₃).

Entsprechend werden unter Phoshoniumverbindungen Salze verstanden, bei denen alle vier H-Atome des PH₄⁺-Ions durch organische Reste R ersetzt sind. Sie weisen bevorzugt die allgemeine Formel I

R¹R²R³R⁴P-X (I)

auf, wobei die Reste R¹, R², R³ und R⁴ gleich oder verschieden sein können. Formel I kann vereinfachend auch als Formel Ib

PR₄-X (Ib)

geschrieben werden. R¹ bis R⁴ sind wie bei den Ammoniumverbindungen la definiert.

Besonders bevorzugte quartäre Phosphoniumverbindungen sind Tetraethylphosphonium-isopropanolat PEt₄-OiPr, Tetra-n-butylphosphonium-isopropanolat PnBu₄-OiPr, Tetra-n-butylphosphonium-chlorid PnBu₄-Cl, Tetra-n-butylphosphonium-hydroxid PnBu₄-OH, und Tetra-n-butylphosphonium-acetat PnBU₄-OOC(CH₃).

Die quartären Ammonium- und Phosphoniumverbindungen sind im Handel erhältlich, oder können auf einfache, an sich bekannte Weise hergestellt werden. So lassen sich beispielsweise die Isopropanolate aus den entsprechenden handelsüblichen Halogeniden durch Umsetzung mit Isopropanol herstellen.

Die benötigte Menge an quartärer Ammonium- und/oder Phosphoniumverbindung richtet sich u.a. nach dem gewünschten Molekulargewicht (Molmasse) des Polymeren, das hergestellt werden soll, nach Art und Menge des verwendeten Aluminiumorganyls und ggf. Coinitiators (siehe unten) und nach der Polymerisationstemperatur. In der Regel verwendet man 0,001 bis 10, bevorzugt 0,01 bis 1 und besonders bevorzugt 0,02 bis 0,2 Mol-% quartäre Ammonium- und/oder Phosphoniumverbindung, bezogen auf die Gesamtmenge der eingesetzten Monomeren.

Bezüglich der Aluminiumorganyle besteht die Vorstellung, dass sie als Aktivator für das Monomer Epoxid wirken. Das Aluminiumorganyl tritt möglicherweise in Wechselwirkung mit dessen Epoxidgruppe, öffnet den Epoxidring und ermöglicht auf diese Weise die Polymerisation des Oxirans. Dieser angenommene Mechanismus unterscheidet sich grundlegend von dem der anionischen Polymerisation von Styrol oder Butadien, bei der das Aluminiumorganyl als sog. "Retarder" die Polymerisationsgeschwindigkeit verringert.

Als Organyle werden die metallorganischen Verbindungen eines Metalls mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich.

Erfindungsgemäß werden einkernige Aluminiumorganyle verwendet, also solche, die pro Molekül (Formeleinheit) ein Aluminiumatom enthalten, im Unterschied zu mehrkernigen Organylen, die zwei oder mehr Aluminiumatome im Molekül aufweisen. Nicht erfindungsgemäße, zweikernige Aluminiumorganyle werden beispielsweise im genannten Stand der Technik von Braune und Okuda verwendet.

Als Aluminiumorganyle können insbesondere solche der Formel R₃-Al verwendet werden, wobei die Reste R unabhängig voneinander Wasserstoff, Halogen, C₁₋₂₀-Alkyl, C₆₋₂₀-Aryl oder C₇₋₂₀-Arylalkyl bedeuten. Bevorzugt werden als Aluminiumorganyl, Aluminiumtrialkyle verwendet.

Die Alkylreste können gleich sein, z.B. Trimethylaluminium (TMA), Triethylaluminium (TEA), Tri-iso-butylaluminium (TIBA), Tri-n-butylaluminium, Tri-iso-propylaluminium, Tri-n-hexylaluminium, oder verschieden, z.B. Ethyl-di-iso-butyl-aluminium. Ebenso kann man Aluminiumdialkyle wie Di-isobutylaluminiumhydrid (DiBAH) verwenden. Besonders bevorzugt verwendet man als Aluminiumorganyl TEA oder TIBA, ganz besonders bevorzugt TIBA.

Als Aluminiumorganyle können auch solche verwendet werden, die durch teilweise oder vollständige Umsetzung von Alkyl-, Arylalkyl- oder Arylaluminiumverbindungen mit Wasser (Hydrolyse), Alkoholen (Alkoholyse), Aminen (Aminolyse) oder Sauerstoff (Oxidation) gebildet werden, oder die Alkoholat-, Thiolat-, Amid-, Imid- oder Phosphit-Gruppen tragen. Durch Hydrolyse werden Aluminoxane erhalten. Geegnete Aluminoxane sind z.B. Methylaluminoxan, isobutyliertes Methylaluminoxan oder Isobutylaluminoxan.

Alkoholyse ergibt Aluminiumalkoholate, auch als Aluminiumalkoxide bezeichnet (z.B. ...propanolat = ...propoxid). Geeignete Alkoholate sind beispielsweise Dimethyl-aluminium-ethanolat, Diethyl-aluminium-ethanolat, Dimethyl-aluminium-iso-propanolat, Dimethyl-aluminium-n-butanolat, Düsobutyl-aluminium-ethanolat, Di-iso-butyl-aluminium-iso-propanolat, Di-iso-butyl-aluminium-n-butanolat. Geeignete Alkoholate sind außerdem solche des 2,6-Di-tert.-butyl-4-methylphenols, auch als Butylhydroxytoluol (BHT) bezeichnet, beispielsweise Methyl-aluminium-bis(2,6-di-tert-butyl-4-methyl-phenolat) (= Me-Al-(BHT)₂), Isobutyl-aluminium-bis(2,6-di-tert-butyl-4-methylphenolat) (= iBu-AI-(BHT)₂), und Diisobutyl-aluminium-(2,6-di-tert.-butyl-4-methyl-phenolat) (= (iBu)₂-Al-BHT, CAS-Nr. 56252-56-3).

Ein geeignetes Aluminiumamid ist z.B. Diethylaluminium-(N,N-dibutylamid). Oxidation ergibt Aluminiumoxide wie etwa Bis(diisobutyl)aluminiumoxid.

In Abhängigkeit vom molaren Verhältnis von Aluminiumalkyl R₃-Al zum Alkohol R'OH werden bei der Alkoholyse eine, zwei oder alle drei Alkylgruppen des Aluminiumalkyls durch eine Alkoholatgruppe (Alkoxidgruppe) ersetzt. Es können auch Gemische verschiedener Alkoholate R₂-Al-OR', R-Al-(OR')₂ und Al-(OR')₃ entstehen. Gleiches gilt sinngemäß für Aluminiumaryle bzw. -arylalkyle, und für andere Reaktionspartner als Alkohol. So entstehen z.B. bei Umsetzung zweier verschiedener Aluminiumalkyle R₃-Al und R'₃-Al sowohl Verbindungen R₂-AI-R' als auch R-AI-R'₂.

Durch Umsetzung von Aluminiumalkylen mit mehrwertigen Alkoholen, beispielsweise Dialkoholen sind Alkoholate mit mehreren AI-Atomen erhältlich. So erhält man durch Umsetzung von TIBA mit 1,4-Butandiol (HO-nBu-OH) ein Aluminiumalkoholat iBu-Al-O-nBu-O-Al-iBu, das bevorzugt verwendet werden kann.

Es bedeuten Me Methyl, nBu n-Butyl, iBu iso-Butyl.

Die benötigte Menge an Aluminiumorganyl richtet sich u.a. nach Art und Menge des verwendeten Monomeren, nach dem gewünschten Molekulargewicht (Molmasse) des Polymeren, das hergestellt werden soll, nach Art und Menge der verwendeten quartären Ammonium- und/oder Phosphoniumverbindung und ggf. Coinitiator (siehe unten) und nach der Polymerisationstemperatur. In der Regel verwendet man 0,01 bis 10, bevorzugt 0,5 bis 1 Mol-% Aluminiumorganyl, bezogen auf die Gesamtmenge der eingesetzten Monomeren.

Aus dem Gesagten ergibt sich, dass auch Mischungen verschiedener quartärer Ammonium- und/oder Phosphoniumverbindungen bzw. Aluminiumorganyle verwendet werden können.

Das molare Verhältnis von quartärer Ammonium- und/oder Phosphoniumverbindung zu Aluminiumorganyl kann in weiten Grenzen variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an quartärer Ammonium- und/oder Phosphoniumverbindung und Aluminiumorganyl derart, dass in der Reaktionsmischung pro ein Mol Ammonium- und/oder Phosphoniumverbindung 1 bis 100 mol Aluminiumorganyl vorliegen, d.h. bevorzugt beträgt das Molverhältnis von Aluminiumorganyl zu quartärer Ammonium- und/oder Phosphoniumverbindung, gerechnet als Aluminiumatome zu Ammonium-Stickstoffatome bzw. Phoshphonium-Phosphoratome, 1:1 bis 100:1. Besonders bevorzugt liegt das Molverhältnis von Aluminiumorganyl zu Ammonium- und/oder Phosphoniumverbindung bei 1,1 : 1 bis 100 : 1, bevorzugter 1,2 : 1 bis 50 : 1, stärker bevorzugt 1,3 : 1 bis 20 : 1, insbesondere 2,5 : 1 bis 10 : 1. Beispielsweise kann man bei einem Verhältnis von etwa 5:1 arbeiten. Besonders bevorzugt liegt das Molverhältnis von Aluminiumorganyl zu Phosphoniumverbindung bei 1,1:1 bis 10:1. Beispielsweise kann man bei einem Verhältnis von etwa 5:1 arbeiten.

In einer bevorzugten Ausführungsform verwendet man zusätzlich zu der quaternären Ammonium- und/oder Phosphoniumverbindung und dem Aluminiumorganyl, einen Coinitiator. Dies kann beispielsweise dann vorteilhaft sein, wenn als Aluminiumorganyl eine Trialkylaluminiumverbindung wie TIBA oder TEA verwendet wird. Der Coinitiator aktiviert vermutlich die quartäre Ammonium- und/oder Phosphoniumverbindung.

Als Coinitiatoren eignen sich bevorzugt Aluminiumorganyle, wie sie bereits beschrieben wurden, z.B. solche der Formel R¹R²R³Al, wobei R¹, R² und R³ unabhängig voneinander Wasserstoff, Halogen, C₁₋₂₀-Alkyl, C₆₋₂₀-Aryl oder C₇₋₂₀-Arylalkyl bedeuten. Dabei können mindestens zwei der Reste R¹, R² und R³ voneinander verschieden sein. Geeignet sind beispielsweise Alkylaluminiumhydride R-Al-H₂ und R₂-Al-H, z.B. Diisobutylaluminiumhydrid iBu₂-AIH, sowie die bereits genannten Verbindungen Me-Al-(BHT)₂, iBu-Al-(BHT)₂, und (iBu)₂-Al-BHT, CAS-Nr. 56252-56-3. Weiterhin kann man auch Alkylaluminiumhalogenide R-Al-Hal₂ und R₂-AI-Hal (Hal = Halogen), z.B. Diethylaluminiumchlorid Et₂-Al-Cl, verwenden. Auch Aluminiumorganyle mit drei identischen, heteroatomhaltigen Resten, z.B. Aluminiumtrialkoholate wie Aluminium-tri-n-butanolat (nBuO)₃-Al, sind geeignet.

Ein Coinitiator kann mitverwendet werden, muss jedoch nicht. Falls er mitverwendet wird, richtet sich die benötigte Menge u.a. nach dem gewünschten Molekulargewicht (Molmasse) des Polymeren, das hergestellt werden soll, nach Art und Menge des verwendeten Aluminiumorganyls und der quartären Ammonium- und/oder Phosphoniumverbindung, und nach der Polymerisationstemperatur. In der Regel verwendet man 0,005 bis 10, bevorzugt 0,01 bis 10 und besonders bevorzugt 0,5 bis 1 Mol-% Coinitiator, bezogen auf die Gesamtmenge der eingesetzten Monomeren.

Das molare Verhältnis von quartärer Ammonium- und/oder Phosphoniumverbindung zu Coinitiator, falls letzterer mitverwendet wird, kann variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an Coinitiator derart, dass in der Reaktionsmischung pro ein Mol Ammonium- und/oder Phosphoniumverbindung 0,01 bis 10 mol Coinitiator vorliegen, d.h. bevorzugt beträgt das Molverhältnis von Coinitiator zu quartärer Ammonium- und/oder Phosphoniumverbindung, gerechnet als Aluminiumatome zu Stickstoffatome bzw. Phosphoratome, 0,01 : 1 bis 10 :1. Besonders bevorzugt liegt das Molverhältnis Coinitiator zu Ammonium- und/oder Phosphoniumverbindung bei 0,1 : 1 bis 5 : 1, insbesondere 0,5 : 1 bis 2 : 1. Beispielsweise kann man bei einem Verhältnis von etwa 1:1 arbeiten.

Als Alkalimetallverbindung sind alle Verbindungen geeignet, die bei der anionischen Polymerisation als Initiator wirksam sind, insbesondere Alkalimetallhydride und Alkalimetallorganyle, wobei als Alkalimetall beispielsweise Lithium, Natrium oder Kalium geeignet sind.

In Betracht kommende Alkalimetallhydride sind insbesondere Lithiumhydrid, Natriumhydrid oder Kaliumhydrid.

Als Organyle werden die metallorganischen Verbindungen eines Metalls mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich.

Als Alkalimetallorganyle sind bevorzugt die Alkoholate, Hydroxide, Amide, Carboxylate, Aryle, Arylalkyle und Alkyle der Alkalimetalle, geeignet.

Geeignete Alkalimetallalkoholate sind solche von Alkoholen mit 1 bis 10 C-Atomen, beispielsweise die Methanolate, Ethanolate, n- und iso-Propanolate, n-, sec- und tert-Butanolate, sowie die Pentanolate. Der Alkoholatrest kann substituiert sein, z.B. mit C₁-C₅-Alkyl oder Halogen. Bevorzugte Alkoholate sind die tert-Amylate (= 2-Methyl-2-butanolate). Besonders bevorzugt verwendet man Kalium-tert-amylat, Natrium-tert-amylat und Natrium-iso-propanolat.

Als Alkalimetallhydroxide kommen beispielsweise Lithiumhydroxid, Natriumhydroxid oder Kaliumhydroxid in Betracht, insbesondere Kaliumhydroxid.

Geeignete Alkalimetallamide sind z.B. die Verbindungen M-NH₂. Als Alkalimetallcarboxylate R-COOM können solche von Carbonsäuren mit 1 bis 10 C-Atomen verwendet werden. In beiden Fällen ist M = Li, Na, K.

Geeignete Alkalimetallaryle sind beispielsweise Phenyllithium und Phenylkalium, sowie die multifunktionelle Verbindung 1,4-Dilithiobenzol. Als Alkalimetallarylalkyle sind insbesondere Alkalimetallverbindungen vinylsubstituierter Aromaten geeignet, insbesondere Styrylkalium und Styrylnatrium M-CH=CH-C₆H₅ mit M = K oder Na. Sie sind beispielsweise durch Umsetzung des entsprechenden Alkalimetallhydrids mit Styrol in Gegenwart einer Aluminiumverbindung wie TIBA, erhältlich. Ebenso sind oligomere bzw. polymere Verbindungen wie Polystyryl-lithium oder -natrium geeignet, das z.B. durch Vermischen von sec-Butyllithium und Styrol, und anschließende Zugabe von TIBA, erhältlich ist. Weiterhin kann man auch Diphenylhexyl-lithium oder -kalium verwenden.

Geeignete Alkalimetallalkyle sind solche von Alkanen, Alkenen und Alkinen mit 1 bis 10 C-Atomen, beispielsweise mit Ethyl-, Propyl-, Isopropyl-, n-Butyl-, sec-Butyl-, tert-Butyl- , Hexamethylendi-, Butadienyl-, Isoprenyl-, Rest oder die multifunktionellen Verbindungen 1,4-Dilithiobutan oder 1,4-Dilithio-2-buten. Die Alkalimetallalkyle sind insbesondere zur Herstellung der Oxiran-Copolymere gut geeignet: bei der Herstellung der, aus Polyoxiranblöcken und Blöcken des Comonomers, aufgebauten Blockcopolymere können sie vorteilhaft bei der Polymerisation des Comonomerblocks verwendet werden. So kann man z.B. zur Polymerisation des Polystyrolblocks bevorzugt sec-Butyllithium einsetzen.

Wird die Polymerisation als Lösungspolymerisation durchgeführt, richtet sich die Wahl der Alkalimetallverbindung auch nach dem verwendeten Lösungsmittel. Bevorzugt wählt man Alkalimetallverbindung und Lösungsmittel derart, dass sich die Alkalimetallverbindung zumindest teilweise im Lösungsmittel löst.

Aus dem Vorstehenden ergibt sich, dass in einer bevorzugten Ausführungsform die Alkalimetallverbindung ausgewählt ist aus Alkoholaten, Hydriden, Hydroxiden, Amiden, Carboxylen, Arylen, Arylalkylen und Alkylen der Alkalimetalle, oder deren Mischungen. Es versteht sich, dass auch verschiedene Alkalimetallverbindungen verwendet werden können.

Die Herstellung der Alkalimetallverbindungen ist bekannt bzw. die Verbindungen sind im Handel erhältlich.

Vermutlich aktivieren Aluminiumorganyle sowohl die Alkalimetallverbindung, als auch das Epoxid. Es besteht die Vorstellung, dass das Aluminiumorganyl durch Komplexbildung die Löslichkeit der Alkalimetallverbindung verbessert.

Die benötigte Menge an Alkalimetallverbindung richtet sich u.a. nach dem gewünschten Molekulargewicht (Molmasse) des Polymeren, das hergestellt werden soll, nach Art und Menge des verwendeten Aluminiumorganyl und nach der Polymerisationstemperatur. In der Regel verwendet man 0,0001 bis 10, bevorzugt 0,0001 bis 5 und besonders bevorzugt 0,0001 bis 2 Mol-% Alkalimetallverbindung, bezogen auf die Gesamtmenge der eingesetzten Monomeren.

Das molare Verhältnis von Aluminiumorganyl zu Alkalimetallverbindung kann in weiten Grenzen variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an Aluminiumorganyl und Alkalimetallverbindung derart, dass in der Reaktionsmischung pro ein Mol Alkalimetall 1 bis 100 mol Aluminium vorliegen, d.h. bevorzugt beträgt das Molverhältnis von Aluminium zu Alkalimetall 1:1 bis 100:1. Besonders bevorzugt liegt das Molverhältnis Aluminium zu Alkalimetall bei 2:1 bis 50:1, insbesondere 4:1 bis 10:1. Beispielsweise kann man bei einem Verhältnis von etwa 5:1 arbeiten.

Man kann quartäre Ammonium- und/oder Phosphoniumverbindung, und/oder Alkalimetallverbindung, Aluminiumorganyl und ggf. den Coinitiator als solche zugeben, oder - bevorzugt - gelöst bzw. dispergiert (emulgiert oder suspendiert) in einem Lösungsmittel bzw. Dispersionsmittel. Dabei kann - muss jedoch nicht - dieses Lösungs- bzw. Dispersionsmittel identisch sein mit dem bei der Polymerisation verwendeten Lösungsmittel, siehe unten.

Die Zugabe von Ammonium- und/oder Phosphoniumverbindung und/oder Alkalimetallverbindung, Aluminiumorganyl und ggf. Coinitiator kann sowohl zeitlich als auch räumlich betrachtet gemeinsam oder getrennt voneinander, diskontinuierlich auf einmal oder in mehreren Portionen, oder auch kontinuierlich, erfolgen. Bevorzugt ist die getrennte Zugabe.

Der Coinitiator wird bevorzugt zusammen mit oder nach der quartären Ammonium- und/oder Phosphoniumverbindung und/oder Alkalimetallverbindung, und vor dem Aluminiumorganyl zugefügt (bzw. bevor man die Hauptmenge des Aluminiumorganyls zufügt). Es wird angenommen, dass er die quartäre Ammonium- und/oder Phosphoniumverbindung aktiviert.

In einer bevorzugten Ausführungsform ohne Coinitiator ist die Zugabereihenfolge 1) Monomer, 2) quartäre Ammonium- und/oder Phosphoniumverbindung und/oder Alkalimetallverbindung, 3) Aluminiumorganyl. D.h. man fügt der Reaktionsmischung enthaltend die Oxiranmonomeren und ggf. Comonomeren, zunächst die quartäre Ammonium- und/oder Phosphoniumverbindung und/oder Alkalimetallverbindung, und danach das Aluminiumorganyl, hinzu. Man kann auch 1) und 2) vertauschen, also Ammonium- und/oder Phosphoniumverbindung und/oder Alkalimetallverbindung vorlegen und Monomer zufügen, solange nur das Aluminiumorganyl nach der Ammonium- und/oder Phosphoniumverbindung und/oder Alkalimetallverbindung zugegeben wird.

Sofern ein Coinitiator mitverwendet wird, ist die Zugabereihenfolge bevorzugt 1) Ammonium- und/oder Phosphoniumverbindung und/oder Alkalimetallverbindung + Coinitiator, 2) Monomer, 3) Aluminiumorganyl. D.h. man legt bevorzugt eine Mischung von quartärer Ammonium- und/oder Phosphoniumverbindung und/oder Alkalimetallverbindung und Coinitiator vor, gibt das bzw. die Monomeren hinzu und fügt danach das Aluminiumorganyl hinzu. Man kann auch 1) und 2) vertauschen, also Monomer vorlegen und Ammonium- und/oder Phosphoniumverbindung und/oder Alkalimetallverbindung und Coinitator zufügen. Zur Bereitung der Mischung von Ammonium- und/oder Phosphoniumverbindung und/oder Alkalimetallverbindung und Coinitiator kann man z.B. beide Komponenten zusammen vorlegen, oder zunächst die Ammonium- und/oder Phosphoniumverbindung und/oder Alkalimetallverbindung vorlegen und den Coinitiator zufügen.

Demnach fügt man bei dem erfindungsgemäßen Verfahren bevorzugt zunächst die quartäre Ammonium- und/oder Phosphoniumverbindung und/oder Alkalimetallverbindung und danach das Aluminiumorganyl hinzu.

Bei der Polymerisation können Aminverbindungen mitverwendet werden, die das Alkalimetallatom durch Chelatbildung komplexieren. In Betracht kommen insbesondere tertiäre Aminverbindungen wie N,N,N',N'-Tetramethylmethylendiamin (TMMDA), N,N,N',N'-Tetramethylethylendiamin (TMEDA), N,N,N',N'-Tetramethylpropylendiamin (TMPDA), N,N,N',N'-Tetramethylhexendiamin (TMHDA) und andere N,N,N',N'-Tetra-alkyldiamine, sowie Diazabicylco[2,2,2]octan (DABCO). Außerdem sind auch Amine wie Pentamethyldiethylentriamin geeignet.

Der Einsatz von Kronenethern und Kryptanden bei der Polymerisation ist möglich. Vorzugsweise wird jedoch auf deren Einsatz verzichtet. Unter Kronenethern sind planar gebaute, makrocyclische Polyether zu verstehen. Ihre Sauerstoffatome sind beispielsweise durch Ethylenbrücken verbunden. Zu Kronenethern zählen auch solche, deren Sauerstoffatome ganz oder teilweise durch Heteroatome wie N, P oder S ersetzt sind, und Spheranden, d.h. isocyclische Kohlenstoff-Ringe, die -OH oder andere polare Gruppen tragen, welche alle gleichgerichtet in das Innere eines Hohlraumes zeigen. Unter Kryptanden werden makropolycyclische, mit den Kronenethern verwandte Azapolyether verstanden, in denen zwei Brückenkopf-Stickstoffatome durch ein oder mehrere Sauerstoffatome enthaltende Brücken verbunden sind. Näheres siehe Römpp, Stichworte "Kronenether" und "Kryptanden". Der Zusatz von Kronenethern bzw. Kryptanden ist weder als Reagenz noch als Begleitstoff (z.B. Lösungsmittel) bevorzugt.

Durch den Verzicht auf diese (teuren) Verbindungen ist das erfindungsgemäße Verfahren nicht nur einfacher als die Verfahren des Standes der Technik, sondern auch wirtschaftlicher zu betreiben.

Die Polymerisation kann in Abwesenheit oder - bevorzugt - in Gegenwart eines Lösungsmittels durchgeführt werden. Bevorzugt ist das verwendete Lösungsmittel unpolar und enthält keine Sauerstoffatome oder andere die Polarität erhöhende Heteroatome. Die Polymerisation erfolgt besonders bevorzugt in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan, Cyclohexan oder Methylcyclohexan. Bevorzugt werden Lösungsmittel mit einem Siedepunkt oberhalb 70°C verwendet. Besonders bevorzugt wird Heptan, Toluol oder Cyclohexan verwendet.

Nach Beendigung der Polymerisation, d.h. nach Verbrauch der Monomeren, wird die Polymerisation abgebrochen. Während und auch nach Beendigung der Polymerisation, d.h. auch nachdem die Monomere verbraucht sind, liegen in der Reaktionsmischung "lebende" Polymerketten vor, d.h. bei erneuter Monomerzugabe springt die Polymerisationsreaktion sofort wieder an, ohne dass erneut Polymerisationsinitiator zugegeben werden muss. Durch Zugabe eines Kettenabbruchmittels, wird die Reaktion schließlich abgebrochen. Dabei terminiert das Abbruchmittel die lebenden Polymerkettenenden irreversibel.

Als Abbruchmittel kommen alle protonenaktiven Substanzen, und Lewis-Säuren, in Betracht. Geeignet sind beispielsweise Wasser, sowie C₁-C₁₀-Alkohole wie Methanol, Ethanol, Isopropanol, n-Propanol und die Butanole. Ebenfalls geeignet sind aliphatische und aromatische Carbonsäuren wie 2-Ethylhexansäure, sowie Phenole. Auch anorganische Säuren wie Kohlensäure (Lösung von CO₂ in Wasser) und Borsäure können verwendet werden. Bevorzugt werden als Abbruchmittel Wasser, Ethanol oder Isopropanol verwendet.

Die erhaltene Reaktionsmischung kann danach, falls gewünscht, in an sich bekannter Weise auf das Polymere aufgearbeitet werden, z.B. mittels Entgasung in einem Entgasungsextruder oder Verdampfer. Durch die Entgasung werden Restmonomere und gebildete Oligomere, sowie bei der Polymerisation verwendete flüchtige Hilfs- und Begleitstoffe sowie insbesondere das Lösungsmittel, abgetrennt.

Die sonstigen Polymerisationsbedingungen wie Druck und Temperatur richten sich u.a. nach der Reaktivität und Konzentration der Monomere, den verwendeten Ammonium-, Phosphonium- und Aluminiumverbindungen und ihren Konzentrationen. Üblicherweise arbeitet man bei 0,1 bis 50, insbesondere 0,5 bis 10 bar Absolutdruck, und bei -78 bis 100, insbesondere -50 bis 50 und besonders bevorzugt -40 bis 25°C Manteltemperatur. Tiefe Temperaturen ermöglichen eine bessere Kontrolle der Reaktion, jedoch ist die Polymerisationszeit länger. Es kann auch zunächst bei -50 °C bis -10 °C umgesetzt und dann auf Temperaturen von 0 °C bis 30 °C erwärmt werden. Die Polymerisationsdauer beträgt üblicherweise 5 min bis 48 Stunden, insbesondere 10 min bis 12 Stunden.

Das erfindungsgemäße Verfahren zur Herstellung der Polymere kann diskontinuierlich oder kontinuierlich, in jedem üblichen Behälter bzw. Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Alkalimetallverbindung und des Aluminiumorganyls, deren Konzentrationen, des speziell angewandten Verfahrensablaufs (z.B. Zugabereihenfolge) und anderer Parameter, wie Polymerisationsdauer und -temperatur und evtl. Temperaturverlauf, zu Polymerisaten unterschiedlichen Molekulargewichts und unterschiedlicher Molekulargewichtsverteilung. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Neben dem vorstehend beschriebenen Verfahren zur Polymerisation betrifft die Erfindung ebenso die nach dem Polymerisationsverfahren erhältlichen Polymere, d.h. Homopolymere, oder Copolymere aus Gemischen von Epoxiden, oder Copolymere aus Epoxiden oder Oxetanen und Comonomeren, oder deren Mischungen.

Das zahlenmittlere Molekulargewicht Mn der erhaltenen Polymere beträgt bevorzugt 1000 bis 1.000.000, insbesondere 5000 bis 500.000 und besonders bevorzugt 10.000 bis 200.000 g/mol. Auch Molekulargewichte von mindestens 15.000 bzw. mindestens 30.000 sind zugänglich.

Die erhaltenen Copolymere können statistisch aufgebaut sein, d.h. die Abfolge der Monomereinheiten im Copolymer ist rein statistisch, oder alternierend (abwechselnd Epoxid- und Comonomereinheiten). Sie können ebenso eine tapered-Struktur aufweisen. Tapered bedeutet, dass entlang der Polymerkette ein Gradient von Epoxid-reich nach Epoxid-arm oder umgekehrt vorliegt.

Bevorzugt jedoch weisen die Copolymere Blockstruktur auf, es handelt sich also um Blockcopolymere. Bevorzugt sind die Blockcopolymere aufgebaut aus mindestens einem Block aus dem oder den Epoxiden, und mindestens einem Block aus dem oder den Comonomeren. Die erfindungsgemäßen Blockcopolymere können z.B. lineare Zweiblock-Copolymere A-B oder Dreiblock-Copolymere B-A-B bzw. A-B-A sein. Dabei steht A für den Polyepoxid-Block und B für den Block aus Comonomer(en). Für Styrol als bevorzugtes Comonomer ist B demnach ein Polystyrolblock.

Die Blockstruktur entsteht im wesentlichen dadurch, dass man zunächst das Comonomer alleine anionisch polymerisiert, wodurch ein "lebender" Block aus dem Comonomeren entsteht. Nach Verbrauch des Comonomeren wechselt man das Monomere, indem man monomeres Epoxid zufügt und anionisch zu einem Epoxidblock polymerisiert, d.h. an den lebenden Comonomerblock wird ein Polyepoxidblock anpolymerisiert. Beispielsweise kann man zunächst Styrol alleine zu einem Polystyrolblock PS polymerisieren. Nach Verbrauch des Styrols erfolgt der Monomerwechsel, indem man Epoxid zufügt, das dann zum Polyepoxid-Block PPO polymerisiert wird. Als Ergebnis dieser sog. sequentiellen Polymerisation erhält man ein Zweiblockpolymer B-A, z.B. PS-PGME oder PS-PECH. GME steht für Glycidylmethylether, ECH für Epichlorhydrin.

Man kann ebenso zunächst den Polyepoxidblock A herstellen, und danach den Block B aus dem oder den Comonomeren anpolymerisieren. Jedoch wird bevorzugt zunächst der Comonomerblock B und danach der Polyepoxidblock A polymerisiert, beispielsweise zuerst der Polystyrolblock und danach der PGME-Block.

Gegenstand der Erfindung ist demnach auch ein Verfahren, dadurch gekennzeichnet, dass es sich bei den Copolymeren um Blockcopolymere handelt, wobei durch sequentielle Polymerisation zunächst das Comonomer zu einem Polymerblock B polymerisiert wird, und danach das Epoxid zu einem Polyepoxidblock A polymerisiert wird

Aus den Zweiblockpolymeren können durch Kopplung mit einem weiteren lebenden Polymerblock Drei- oder Mehrblockcopolymere hergestellt werden. Dazu wird zunächst ein lebender Polymerblock separat hergestellt und danach mit einem Kopplungsmittel (siehe unten) an das Zweiblockcopolymer gekoppelt. Dreiblockcopolymere können auch mittels eines telechelen Mittelblocks hergestellt werden. So kann man an einen telechelen Polystyrolblock zwei endständige PPO- und/oder PGME-Blöcke anpolymerisieren, wodurch ein Dreiblockcopolymer PPO-PS-PPO, PGME-PS-PGME, oder Mehrblockpolymer PGME-PPO-PS-PPO-PGME entsteht. Bei den Dreiblockcopolymeren können die beiden Comonomerblöcke (z.B. Polystyrolblöcke) gleich groß (gleiches Molekulargewicht, also symmetrischer Aufbau) oder verschieden groß (unterschiedliches Molekulargewicht also asymmetrischer Aufbau) sein. Die Blockgrößen hängen beispielsweise ab von den verwendeten Monomermengen und den Polymerisationsbedingungen.

In einer bevorzugten Ausführungsform wird zur Herstellung der Blockcopolymere eine Alkalimetallverbindung mitverwendet. Sie wirkt als Polymerisationsinitiator. Geeignete Alkalimetallverbindungen sind insbesondere Alkalimetallorganyle oder Alkalimetallhydride oder deren Mischungen. Als Alkalimetallorganyle verwendet man z.B. mono-, bi- oder multifunktionellen Alkalimetallalkyle, -aryle oder -aralkyle, insbesondere lithiumorganische Verbindungen wie Ethyl-, Propyl-, Isopropyl-, n-Butyl-, sec.-Butyl-, tert.-Butyl-, Phenyl-, Diphenylhexyl-, Hexamethylendi-, Butadienyl-, Isoprenyl-, Polystyryl-lithium oder die multifunktionellen Verbindungen 1,4-Dilithiobutan, 1,4-Dilithio-2-buten oder 1,4-Dilithiobenzol. Bevorzugt verwendet man sec.-Butyllithium. Geeignete Alkalimetallhydride sind z.B. Lithiumhydrid, Natriumhydrid oder Kaliumhydrid.

Die benötigte Menge an Alkalimetallverbindung richtet sich u.a. nach dem gewünschten Molekulargewicht (Molmasse) des Polymeren, das hergestellt werden soll, nach Art und Menge des verwendeten Retarders und nach der Polymerisationstemperatur. In der Regel verwendet man 0,0001 bis 10, bevorzugt 0,001 bis 1 und besonders bevorzugt 0,01 bis 0,2 Mol-% Alkalimetallorganyl, bezogen auf die Gesamtmenge der eingesetzten Monomeren.

Die Herstellung der Alkalimetallverbindungen ist bekannt bzw. die Verbindungen sind im Handel erhältlich.

Die Alkalimetallverbindung wird bevorzugt bei der Polymerisation des Polymerblocks B (Comonomerblock) mitverwendet. Dabei können sowohl die Alkalimetallverbindung als auch das Aluminiumorganyl und die Ammonium- und/oder Phosphoniumverbindung bereits bei der Polymerisation des ersten Blocks zugegeben werden. Jedoch kann man beispielsweise dann, wenn - wie es bevorzugt ist - zunächst der Comonomer-Block B (z.B. ein Polystyrolblock) und danach der Polyepoxid-Block A hergestellt wird, den Comonomerblock in Gegenwart der Alkalimetallverbindung polymerisieren (d.h. ohne Aluminiumorganyl) und das Aluminiumorganyl sowie die Ammonium- und/oder Phosphoniumverbindung erst bei der Polymerisation des Polyoxiranblocks zufügen.

Beispielsweise kann man zunächst aus Styrol mittels Alkalimetallverbindung (z.B. sec-Butyllithium) den Polystyrolblock herstellen, und erst bei der Zugabe des Oxiranmonomers das Aluminiumorganyl (z.B. TIBA) und die Ammonium- und/oder Phosphoniumverbindung (z.B. NnBu₄-Cl) zufügen und zum Polyoxiranblock polymerisieren.

Besonders bevorzugt gibt man - nach der Herstellung des Comonomerblocks - erst das Epoxidmonomer und die Ammonium- und/oder Phosphoniumverbindung, und nach dem Anspringen der Reaktion das Aluminiumorganyl hinzu.

Die genannten Blockcopolymere können eine (vorstehend beschriebene) lineare Struktur aufweisen. Jedoch sind auch verzweigte oder sternförmige Strukturen möglich und für manche Anwendungen bevorzugt. Verzweigte Blockcopolymere erhält man in bekannter Weise, z.B. durch Pfropfreaktionen von polymeren "Seitenästen" auf eine Polymer-Hauptkette. Sternförmige Blockcopolymere sind z.B. durch Umsetzung der lebenden anionischen Kettenenden mit einem mindestens bifunktionellen Kopplungsmittel, wie z.B. epoxidierten Glyceriden (z. B. epoxidiertem Leinsamenöl oder Sojaöl), Siliciumhalogeniden wie SiCl₄, Divinylbenzol, polyfunktionellen Aldehyden, Ketonen, Estern, Anhydriden oder Epoxiden, oder speziell für die Dimerisierung Dichlordialkylsilanen, Dialdehyden wie Terephthalaldehyd und Estern wie Ethylformiat, erhältlich. Durch Kopplung gleicher oder verschiedener Polymerketten kann man symmetrische oder asymmetrische Sternstrukturen herstellen, d.h. die einzelnen Sternäste können gleich oder verschieden sein.

Die erfindungsgemäßen Polymere können außerdem übliche Zusatzstoffe und Verarbeitungshilfsmittel in der für diese Stoffe üblichen Mengen enthalten, z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Die Herstellung der Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Aus den erfindungsgemäßen Homo- und Copolymeren lassen sich Formkörper (auch Halbzeuge), Folien, Fasern und Schäume aller Art herstellen.

Gegenstand der Erfindung sind demnach auch die Verwendung der erfindungsgemäßen Homo- und Copolymere zur Herstellung von Hilfsmitteln, Formkörpern, Folien, Fasern und Schäumen, sowie die aus den Polymeren erhältlichen Hilfsmittel, Formkörper, Folien, Fasern und Schäume.

Hilfsmittel dienen z. B. zur Behandlung von Leder oder Papier, bzw. zur Mitverwendung in Leder, Papier, Anstrichmitteln, Bauhilfsmitteln sowie kosmetischen oder pharmazeutischen Zusammensetzungen. Sie können dann in Form von Pulvern, Granulaten, Kompaktaten, Suspensionen, Lösungen, z. B. mit Lösungsmittelaustausch, eingesetzt werden.

Das erfindungsgemäße Verfahren ist ein alternatives Verfahren zur Polymerisation von Epoxiden und weist gegenüber den Verfahren des Standes der Technik u.a. ökonomische Vorteile auf. Die Polymerisationszeiten sind deutlich kürzer als bei den bisher bekannten Verfahren. Zugleich sind trotz der kürzeren Polymerisationszeit die erzielten Molekulargewichte höher, und es sind Polymere anstelle der bisher üblichen Oligomere zugänglich. Die Molekulargewichtsverteilung ist sehr eng..

Die verwendeten Initiatorsysteme bzw. ihre Komponenten sind einfacher als diejenigen des Standes der Technik.

Das Verfahren erlaubt die Herstellung von Homo- und Copolymeren auf gleichermaßen einfache Weise. Die erhaltenen Polymere zeichnen sich durch geringe Gehalte an Restmonomeren bzw. -oligomeren aus. Außerdem lassen sich PO-Copolymere und PO-EO-Copolymere unter ähnlichen Verfahrensbedingungen herstellen, was wegen des preiswerteren EO wirtschaftlich vorteilhaft ist.

Das gefundene Verfahren erlaubt eine bessere Kontrolle der Epoxidpolymerisation, d. h. die Polymerisation der reaktiven Epoxide lässt sich auf einfache Weise steuern.

Die Erfindung wird durch die nachstehenden Beispiele näher erläutert.

### Beispiele:

### Homopolymerisation von Glycidylmethylether

Glycidylmethylether (GME)-Polymerisation, initiiert durch NOct₄Br (I) in Gegenwart von i-Bu₃Al, [GME] = 3 mol/l, in Toluol, -30°C, gefolgt von langsamer Temperaturerhöhung auf 20°C.

| Nr. | [Al]/[I] | Polymerisationszeit | Umsatz (%) | Mn (th.) (g/mol) | Mn (exp.) (g/mol) | PDI |
|---|---|---|---|---|---|---|
| 1 | 1,3 | 5h20min | 100 | 3.000 | 3.100 | 1,16 |
| 2 | 1,5 | 15h | 100 | 10.000 | 10.900 | 1,06 |
| 3 | 2,6 | 4h50min | 100 | 30.000 | 28.700 | 1,07 |
| 4 | 4,3 | 7h | 95 | 47.500 | 43.600 | 1,10 |
| 5 | 7 | 7h30min | 93 | 93.000 | 87.100 | 1,16 |

### Beispiel 1:

### 1,7 ml Toluol, 2,2 ml GME, 3,2 ml NOct₄Br (0,22 mol/l in Toluol) und 0,91 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (1,7 ml) und Glycidylmethylether (2,2 ml) werden nacheinander unter Vakuum durch angeschlossene ausgeheizte Glasrohre in den Reaktor gefüllt. Der Reaktor wird in einem Ethanolbad bei -30°C platziert. Dann werden 3,2 ml NOct₄Br-Lösung (0,22 mol/l in Toluol), gefolgt von 0,91 ml i-Bu₃Al-Lösung (1,0 mol/l) mit Spritzen und unter Argon zugefügt. Die Mischung wird magnetisch für 5 Stunden 20 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 2

### 4,1 ml Toluol, 2,0 ml GME, 0,87 ml NOct₄Br (0,22 mol/l in Toluol) und 0,29 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (4,1 ml) und Glycidylmethylether (2,0 ml) werden nacheinander unter Vakuum durch angeschlossene ausgeheizte Glasrohre in den Reaktor gefüllt. Der Reaktor wird in einem Ethanolbad bei -30°C platziert. Dann werden 0,87 ml NOct₄Br-Lösung (0,22 mol/l in Toluol), gefolgt von 0,29 ml i-Bu₃Al-Lösung (1,0 mol/l) mit Spritzen und unter Argon zugefügt. Die Mischung wird magnetisch für 15 Stunden gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 3

### 7,2 ml Toluol, 3,0 ml GME, 0,44 ml NOct₄Br (0,22 mol/l in Toluol) und 0,25 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (7,2 ml) und Glycidylmethylether (3,0 ml) werden nacheinander unter Vakuum durch angeschlossene ausgeheizte Glasrohre in den Reaktor gefüllt. Der Reaktor wird in einem Ethanolbad bei -30°C platziert. Dann werden 0,44 ml NOct₄Br-Lösung (0,22 mol/l in Toluol), gefolgt von 0,25 ml i-Bu₃Al-Lösung (1,0 mol/l) mit Spritzen und unter Argon zugefügt. Die Mischung wird magnetisch für 4 Stunden 50 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 4

### 7,4 ml Toluol, 3,0 ml GME, 0,26 ml NOct₄Br (0,22 mol/l in Toluol) und 0,25 ml i-Bu₃Al (1 mol/I in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (7,4 ml) und Glycidylmethylether (3,0 ml) werden nacheinander unter Vakuum durch angeschlossene ausgeheizte Glasrohre in den Reaktor gefüllt. Der Reaktor wird in einem Ethanolbad bei -30°C platziert. Dann werden 0,26 ml NOct₄Br-Lösung (0,22 mol/l in Toluol), gefolgt von 0,25 ml i-Bu₃Al-Lösung (1,0 mol/l) mit Spritzen und unter Argon zugefügt. Die Mischung wird magnetisch für 7 Stunden gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 5

### 5,6 ml Toluol, 2,2 ml GME, 0,10 ml NOct₄Br (0,22 mol/l in Toluol) und 0,15 ml 1-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (5,6 ml) und Glycidylmethylether (2,2 ml) werden nacheinander unter Vakuum durch angeschlossene ausgeheizte Glasrohre in den Reaktor gefüllt. Der Reaktor wird in einem Ethanolbad bei -30°C platziert. Dann werden 0,10 ml NOct₄Br-Lösung (0,22 mol/l in Toluol), gefolgt von 0,15 ml i-Bu₃Al-Lösung (1,0 mol/l) mit Spritzen und unter Argon zugefügt. Die Mischung wird magnetisch für 7 Stunden 30 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Homopolymerisation von Epichlorhydrin

### Polymerisation von Epichlorhydrin durch das System NOct₄Br/TIBA in Toluol, [ECH] = 3M, -40°C bzw. -35°C, gefolgt von langsamer Temperaturerhöhung auf 20°C.

| Nr. | [Al]/[1] | T(°C) | Polymerisationszeit | Umsatz (%) | Mn (th.) (g/mol) | Mn (exp.) (g/mol) | PDI |
|---|---|---|---|---|---|---|---|
| 6 | 1,5 | -40 | 2h 20min | 100 | 10.000 | 9.400 | 1,14 |
| 7 | 2,6 | -40 | 2h 30min | 100 | 30.000 | 30.200 | 1,11 |
| 8 | 2,7 | -35 | 7h 15min | 95 | 47.500 | 44.300 | 1,12 |
| 9 | 5,4 | -35 | 8h 00min | 100 | 100.000 | 83.500 | 1,23 |

### Beispiel 6

### 7,7 ml Toluol, 3 ml ECH, 1,6 ml NOct₄Br (0,22 mol/l in Toluol) und 0,53 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (7,7 ml) und Epichlorhydrin (3,0 ml) werden nacheinander unter Vakuum durch angeschlossene ausgeheizte Glasrohre in den Reaktor gefüllt. Der Reaktor wird in einem Ethanolbad bei -40°C platziert. Dann werden 1,6 ml NOct₄Br-Lösung (0,22 mol/l in Toluol), gefolgt von 0,53 ml i-Bu₃Al-Lösung (1,0 mol/l) mit Spritzen und unter Argon zugefügt. Die Mischung wird magnetisch für 2 Stunden 20 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 7

### 9 ml Toluol, 3 ml ECH, 0,54 ml NOct₄Br (0,22 mol/l in Toluol) und 0,31 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (9,0 ml) und Epichlorhydrin (3,0 ml) werden nacheinander unter Vakuum durch angeschlossene ausgeheizte Glasrohre in den Reaktor gefüllt. Der Reaktor wird in einem Ethanolbad bei -40°C platziert. Dann werden 0,54 ml NOct₄Br-Lösung (0,22 mol/l in Toluol), gefolgt von 0,31 ml i-Bu₃Al-Lösung (1,0 mol/l) mit Spritzen und unter Argon zugefügt. Die Mischung wird magnetisch für 2 Stunden 30 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 8

### 12,4 ml Toluol, 4 ml ECH, 0,43 ml NOct₄Br (0,22 mol/l in Toluol) und 0,26 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (12,4 ml) und Epichlorhydrin (4,0 ml) werden nacheinander unter Vakuum durch angeschlossene ausgeheizte Glasrohre in den Reaktor gefüllt. Der Reaktor wird in einem Ethanolbad bei -35°C platziert. Dann werden 0,43 ml NOct₄Br-Lösung (0,22 mol/l in Toluol), gefolgt von 0,26 ml i-Bu₃Al-Lösung (1,0 mol/l) mit Spritzen und unter Argon zugefügt. Die Mischung wird magnetisch für 7 Stunden 15 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 9

### 12,6 ml Toluol, 4 ml ECH, 0,22 ml NOct₄Br (0,22 mol/l in Toluol) und 0,26 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (12,6 ml) und Epichlorhydrin (4,0 ml) werden nacheinander unter Vakuum durch angeschlossene ausgeheizte Glasrohre in den Reaktor gefüllt. Der Reaktor wird in einem Ethanolbad bei -35°C platziert. Dann werden 0,22 ml NOct₄Br-Lösung (0,22 mol/l in Toluol), gefolgt von 0,26 ml i-Bu₃Al-Lösung (1,0 mol/l) mit Spritzen und unter Argon zugefügt. Die Mischung wird magnetisch für 8 Stunden gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Homopolymerisation von Glycidyl-iso-propylether

### Polymerisation von Glycidyl-iso-propylether durch das System NOct₄Br/TIBA in Toluol, [GiPrE] = 1,5 M, bei 20°C.

| Nr. | [AI]/[I] | Polymerisationszeit | Umsatz (%) | Mn (th.) (g/mol) | Mn (exp.) (g/mol) | PDI |
|---|---|---|---|---|---|---|
| 10 | 1,5 | 3h 00min | 100 | 5.000 | 5.600 | 1,07 |
| 11 | 4 | 5h 30min | 91 | 27.300 | 28.700 | 1,10 |
| 12 | 6,5 | 24h 00min | 100 | 50.000 | 50.200 | 1,15 |

### Beispiel 10

### 6,3 ml Toluol, 2 ml GiPrE, 1,7 ml NOct₄Br (0,22 mol/l in Toluol) und 0,56 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (6,3 ml) und Glycidyl-iso-propylether (2,0 ml) werden nacheinander unter Vakuum durch angeschlossene ausgeheizte Glasrohre in den Reaktor gefüllt. Dann werden 1,7 ml NOct₄Br-Lösung (0,22 mol/l in Toluol), gefolgt von 0,56 ml i-Bu₃Al-Lösung (1,0 mol/l) mit Spritzen und unter Argon zugefügt. Die Mischung wird magnetisch für 3 Stunden gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 11

### 12 ml Toluol, 3 ml GiPrE, 0,42 ml NOct₄Br (0,22 mol/l in Toluol) und 0,37 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (12 ml) und Glycidyl-iso-propylether (3,0 ml) werden nacheinander unter Vakuum durch angeschlossene ausgeheizte Glasrohre in den Reaktor gefüllt. Dann werden 0,42 ml NOct₄Br-Lösung (0,22 mol/l in Toluol), gefolgt von 0,37 ml i-Bu₃Al-Lösung (1,0 mol/l) mit Spritzen und unter Argon zugefügt. Die Mischung wird magnetisch für 5 Stunden 30 Minuten gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Beispiel 12

### 12,3 ml Toluol, 3 ml GiPrE, 0,25 ml NOct₄Br (0,22 mol/l in Toluol) und 0,36 ml i-Bu₃Al (1 mol/l in Toluol)

Die Polymerisation wird unter Vakuum in einem Glasreaktor, welcher mit einem Magnetrührer und PTFE-Hähnen ausgestattet ist und welcher vorher unter Vakuum ausgeheizt worden ist, durchgeführt. Toluol (12,3 ml) und Glycidyl-iso-propylether (3,0 ml) werden nacheinander unter Vakuum durch angeschlossene ausgeheizte Glasrohre in den Reaktor gefüllt. Dann werden 0,25 ml NOct₄Br-Lösung (0,22 mol/l in Toluol), gefolgt von 0,36 ml i-Bu₃Al-Lösung (1,0 mol/l) mit Spritzen und unter Argon zugefügt. Die Mischung wird magnetisch für 24 Stunden gerührt. Die Polymerisation wird durch Hinzufügen von entgastem Ethanol (ungefähr 5 ml) beendet. Die Lösungsmittel werden zuerst mittels eines Rotationsverdampfers in wenigen Minuten entfernt, dann werden verbleibende Lösungsmittelreste unter Vakuum bei Raumtemperatur während einiger Stunden entfernt. Die Umsätze werden gravimetrisch nach komplettem Trocknen des Polymers bestimmt.

### Polymerisation von Oxetan und Ethoxyethylglycidylether (EEGE) initiiert durch NOct₄Br (I) in Gegenwart von Triisobutylaluminium; Lösungsmittel Toluol.

| Nr. | Polymere | [Al]/[I] | [M] (mol/l) | Mₙ (th) (g/mol) | Mₙ (exp) a) (g/mol) | Umsatz (%) | T (°C) | Zeit (h) | PDI |
|---|---|---|---|---|---|---|---|---|---|
| 13 | Polyoxetan | 5 | 4,9 | 10.000 | 8.900 | 100 | RT | 55 | 1,18 |
| 14 | PEEGE b) | 1,5 | 1,5 | 8.400 | 8.400 | 84 | -30 | 4 | 1,11 |

| | | | | | | | | | |
|---|---|---|---|---|---|---|---|---|---|
| a) Gemessen durch SEC, kalibriert durch PS-Standards b) Poly(ethoxyethylglycidylether) : geschütztes Polyglycidol | | | | | | | | | |

### Beispiel 13

### 6,9 ml Toluol, 5,3 ml Oxetan, 2,16 ml NOct₄Br ([NOct₄Br] = 0,22 mol/l in Toluol), 2 ml i-Bu₃Al ([i-Bu₃Al] = 1 mol/l in Toluol)

Die Polymerisation wird unter trockenem Argon in einem Rundkolben, welcher unter Vakuum ausgeheizt worden ist, und welcher mit einem Magnetrührer und PTFE-Hähnen ausgestattet ist, durchgeführt. Das Toluol wird unter Vakuum durch angeschlossene, ausgeheizte Glasrohre eingeführt. Dann wird Oxetan unter Vakuum durch angeschlossene, ausgeheizte Glasrohre eingeführt. Dann wird eine Lösung von NOc-tyl₄Br in Toluol ([NOct₄Br] = 0,22 mol/l) gefolgt von einer Lösung von i-Bu₃Al in Toluol ([i-Bu₃Al] = 1 mol/l) über Spritzen unter Argon zugegeben. Die Mischung wird magnetisch für 55 Stunden bei Raumtemperatur gerührt. Die Reaktion wird am Ende durch Zugabe von entgastem Ethanol beendet. Verbleibendes Lösungsmittel und Monomer werden dann bei Raumtemperatur unter reduziertem Druck entfernt, und zum Ende wird unter Vakuum getrocknet. Das so erhaltene Polymer wird dann gewogen, um die Ausbeute der Reaktion zu bestimmen.

### Beispiel 14

### 2,8 ml Toluol, 1 ml EEGE, 0,44 ml NOct₄Br ([NOct₄Br] = 0,22 mol/l in Toluol), 0,14 ml i-Bu₃Al ([i-Bu₃Al] = 1 mol/l in Toluol)

Die Polymerisation wird unter trockenem Argon in einem Rundkolben, welcher unter Vakuum ausgeheizt worden ist, und welcher mit einem Magnetrührer und PTFE-Hähnen ausgestattet ist, durchgeführt. Das Toluol wird unter Vakuum durch angeschlossene, ausgeheizte Glasrohre eingeführt. Dann wird EEGE unter Vakuum durch angeschlossene, ausgeheizte Glasrohre eingeführt. Dann wird eine Lösung von NOc-tyl₄Br in Toluol ([NOct₄Br] = 0,22 mol/l) über Spritzen unter Argon bei Raumtemperatur zugegeben. Die Mischung wird dann auf -30 °C gekühlt und eine Lösung von i-Bu₃Al wird mittels Spritzen unter Argon zugegeben. Die Mischung wird magnetisch für 4 Stunden gerührt. Die Reaktion wird am Ende durch Zugabe von entgastem Ethanol beendet. Verbleibendes Lösungsmittel und Monomer werden dann bei Raumtemperatur unter reduziertem Druck entfernt, und zum Ende wird unter Vakuum getrocknet. Das so erhaltene Polymer wird dann gewogen, um die Ausbeute der Reaktion zu bestimmen.
EEGE-Synthese: Fitton, A.; Hill, J.; Jane, D.; Miller, R. Synthesis, 1987, 1140-1142

### Copolymere basierend auf Glycidylmethylether (GME) und Epichlorhydrin (ECH); PS-b-PGME, PS-b-PECH und PPOx-r-PECH.

### PS-b-PGME, PS-b-PECH

Die Effizienz des Initiator-Systems NOct₄Br/(i-Bu₃Al) wird für die Hochgeschwindigkeitssynthese von gut kontrolliertem PGME, PECH-Homopolymeren untersucht. Dieser Ansatz wird dann auf die Synthese von Diblock-Copolymeren, PS-b-PGME, PS-b-PECH angewandt, indem ein in-situ-Austausch des Lithium-Gegenions durch ein Äquivalent eines Tetraalkylammoniumsalzes eingesetzt wird, wie in Schema 1 beschrieben.

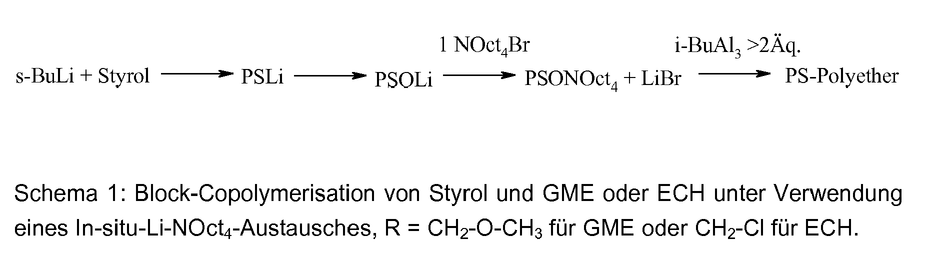

In der Praxis wird eine Lösung von Tetraalkylammoniumsalz in Toluol nach Zugabe eines Oxetanmonomers zu dem PSLi, um Nebenreaktionen der Cl-Funktion des ECH mit dem PSLi zu vermeiden, hinzugefügt. Nach schneller Zugabe von einer Oxiran-Einheit verläuft die Austauschreaktion quantitativ, begleitet durch die Ausbildung von LiBr in dem Medium. ECH oder GME-Polymerisationen werden dann durch die Addition von i-Bu₃Al ausgelöst. In der Tat läuft die Reaktion nur bei Verhältnissen [Al]/[Li] von mehr als 2 ab. Es wird vermutet, dass LiBr ein Äquivalent i-Bu₃Al abfängt, um einen inaktiven "ate"-Komplex zu bilden, ein weiteres Äquivalent ist notwendig, um den initiierenden "ate"-Komplex zu bilden und der Überschuss trägt zur Monomer-Aktivierung bei. Eine Serie von Block-Copolymer-Experimenten wird unter Verfolgung dieser Strategie durchgeführt. Die Resultate sind in Tabelle 1 zusammengestellt.

**Tabelle 1: Synthese von PS-b-PGME, PS-b-PECH, initiiert durch Li/NOct₄Br-Austausch, in Toluol bei -30°C ([i-Bu₃Al]/[I] = 2,5 - 2,8, Umsatz = 100%, 2 < t < 4h)**

| Nr. | Copolymere | Mn (exp) PSLi a) (g/mol) | Mn (th) PEO b) (g/mol) | Mn (exp) app Diblock (g/mol) | Diblock-Effizienz c) % |
|---|---|---|---|---|---|
| 15 | PS-b-PGME | 5.000 | 9.000 | 10.000 | 75 |
| 16 | PS-b-PECH | 5.000 | 10.000 | 13.000 | 75 |

| | | | | | |
|---|---|---|---|---|---|
| a) bestimmt durch SEC, kalibriert durch PS-Standards b) Mn (th) als quantitativ angenommen bei PSLi oder PILi als ersten Block c) bestimmt durch SEC durch das Verhältnis von PS-Signalen von verbliebenen Homo-PS und PS-b-PPOx | | | | | |

### Beispiel 15

10 ml Toluol werden durch eine Messglasröhre unter Vakuum in einen Glasreaktor, welcher mit einem PTFE-Hahn versehen ist, eingeführt. Dann werden 0,6 ml Styrol und 0,36 ml s-BuLi ([s-BuLi] = 0,3 mol/l in Cyclohexan) nacheinander durch Spritzen unter Argon hinzugefügt. Die Styrolpolymerisation wird für 2 Stunden bei Raumtemperatur und unter Vakuum durchgeführt. Dann wird 1 ml GME durch eine Messglasröhre zu dem PSLi hinzugefügt, gefolgt von der Addition von 0,49 ml NOct₄Br ([NOct₄Br] = 0,22 mol/l in Toluol) und schließlich 0,3 ml i-Bu₃Al ([i-Bu₃Al] = 1 mol/l in Toluol) mittels einer Spritze unter Argon. Die zweite Polymerisation wird für zwei Stunden bei -30 °C unter Vakuum durchgeführt. Dann wird die Polymermischung durch Addition von Ethanol deaktiviert. Das Polymer wird durch Verdampfen des Lösungsmittels unter Vakuum erhalten. Das Endpolymer wird dann charakterisiert Mₙ(SEC)Diblock = 10.000 g/mol, Mₙ(SEC)PS deaktiviert = 5.000 g/mol, Diblock-Effizienz ist 75 %.

### Beispiel 16

15 ml Toluol werden durch eine Messglasröhre unter Vakuum in einen Glasreaktor, welcher mit einem PTFE-Hahn versehen ist, eingeführt. Dann werden 1 ml Styrol und 0,59 ml s-BuLi ([s-BuLi] = 0,31 mol/l in Cyclohexan) nacheinander durch Spritzen unter Argon hinzugefügt. Die Styrolpolymerisation wird für 2 Stunden bei Raumtemperatur und unter Vakuum durchgeführt. Dann wird 1 ml POx durch eine Messglasröhre zu dem PSLi hinzugefügt, gefolgt von der Addition von 0,82 ml NOct₄Br ([NOct₄Br] = 0,22 mol/l in Toluol) und schließlich 0,45 ml i-Bu₃Al ([i-Bu₃Al] = 1 mol/l in Toluol) mittels einer Spritze unter Argon. Die zweite Polymerisation wird für zwei Stunden bei -30 °C unter Vakuum durchgeführt. Dann wird die Polymermischung durch Addition von Ethanol deaktiviert. Das Polymer wird durch Verdampfen des Lösungsmittels unter Vakuum erhalten. Das Endpolymer wird dann charakterisiert Mₙ(SEC)Diblock = 13.000 g/mol, Mₙ(SEC)PS deaktiviert = 5.000 g/mol, Diblock-Effizienz ist 75 %.

Eine Effizienz in der Ausbildung eines Blockcopolymers von ungefähr 75 % legt es nahe, dass beinahe alle der PSLi-Ketten in der Lage sind, die GME- oder ECH-Polymerisation nach Gegenion-Austausch und Addition von i-Bu₃Al als Aktivator zu initiieren. Der Prozentanteil an deaktiviertem PS kann entweder von einem Hydridtransfer von Triisobutylaluminium und/oder von der Gegenwart von Spuren von Verunreinigungen in dem Polymerisationsmedium herrühren.

### PPOx-r-PECH

Da durch ECH und POx aktivierte anionische Polymerisationen unter sehr ähnlichen experimentellen Bedingungen verlaufen und da beide fast frei von Transfer- und Terminierungsreaktionen sind, wurde die Synthese von statistischen ECH/POx Copolymeren mit kontrollierten molaren Massen und einer homogenen Verteilung von Comonomer-Einheiten entlang ihrer Kette untersucht. Eine erste Serie von Copolymerisationsexperimenten wurde durchgeführt in Toluol unter Verwendung von NOct₄Br als Initiator bei Temperaturen von -30 °C und Aufwärmen auf Raumtemperatur (25 °C). Die Resultate sind in Tabelle 2 aufgeführt.

**Tabelle 2. Statistische Copolymerisation von ECH und POx initiiert durch NOct₄Br(I) in Gegenwart von Triisobutylaluminium; Lösungsmittel Toluol.**

| Nummer | [Al]/[I] | [ECH]/[POx] im Comonomervorlauf | Umsatz (%) | Mn th. (g/mol) | Mn exp. (g/mol) a) | PDI |
|---|---|---|---|---|---|---|
| 17 | 1,5 | 0,50 | 100 | 12.000 | 11.000 | 1,10 |
| 18 | 1,5 | 0,50 | 100 | 20.000 | 22.000 | 1,09 |

| | | | | | | |
|---|---|---|---|---|---|---|
| a) bestimmt durch SEC, kalibriert durch PS-Standards | | | | | | |

### Beispiel 17

15 ml Toluol werden durch Messglasröhren unter Vakuumbedingungen in einen Glasreaktor, welcher mit einem PTFE-Hahn ausgestattet ist, eingeführt. Dann werden gleichzeitig 1 ml POx und 0,8 ml ECH durch Messglasröhren hinzugefügt, gefolgt von Hinzufügen von 0,75 ml NOct₄Br ([NOct₄Br] = 0,22 mol/l in Toluol) und 0,25 ml i-Bu₃Al ([i-Bu₃Al] - 1 mol/l in Toluol) mittels einer Spritze unter Argon. Die Copolymerisation wird für zwei Stunden bei -30 °C unter Vakuum durchgeführt. Dann wird die Polymermischung durch Addition von Ethanol deaktiviert. Das Polymer wird durch Verdampfen des Lösungsmittels unter Vakuum erhalten. Das Endcopolymer wird dann charakterisiert Mn(SEC)copolymer = 11.000 g/mol, PDI = 1,10 mit einer 50/50 molaren Zusammensetzung des Zulaufs, überprüft durch NMR.

### Beispiel 18

20 ml Toluol werden durch Messglasröhren unter Vakuumbedingungen in einen Glasreaktor, welcher mit einem PTFE-Hahn ausgestattet ist, eingeführt. Dann werden gleichzeitig 2 ml POx und 1,6 ml ECH durch Messglasröhren hinzugefügt, gefolgt von Hinzufügen von 0,75 ml NOct₄Br ([NOct₄Br] = 0,22 mol/l in Toluol) und 0,25 ml i-Bu₃Al ([i-Bu₃Al] - 1 mol/l in Toluol) mittels einer Spritze unter Argon. Die Copolymerisation wird für zwei Stunden bei -30 °C unter Vakuum durchgeführt. Dann wird die Polymermischung durch Addition von Ethanol deaktiviert. Das Polymer wird durch Verdampfen des Lösungsmittels unter Vakuum erhalten. Das Endcopolymer wird dann charakterisiert Mn(SEC)copolymer = 22.000 g/mol, PDI = 1,09 mit einer 50/50 molaren Zusammensetzung des Zulaufs, überprüft durch NMR.

Wenn ein niedriges [Al]/[1]-Verhältnis (1,5) verwendet wird, wird ein gutes Verhältnis zwischen experimentellen und berechneten molaren Massen des Copolymers erhalten, und die beobachteten nahen Polydispersitäten unterstützen die Formierung von ECH/POx-Copolymeren mit kontrollierter Struktur und einer Zusammensetzung über einen breiten Bereich von molaren Massen.

## Patentansprüche

1. Verfahren zur Herstellung von Homo- oder Copolymeren aus von Ethylenoxid und Propylenoxid verschiedenen Epoxiden oder Oxetanen, oder von Copolymeren aus von Ethylenoxid und Propylenoxid verschiedenen Epoxiden oder Oxetanen und Comonomeren, durch anionische Polymerisation, **dadurch gekennzeichnet, dass** man in Gegenwart einer quartären Ammonium- und/oder Phosphoniumverbindung und/oder Alkalimetallverbindung und in Gegenwart eines einkernigen Aluminiumorganyls der Formel R₃-Al, wobei die Reste R unabhängig voneinander Wasserstoff, Halogen, C₁₋₂₀-Alkyl, -O-C₁₋₂₀-Alkyl, -OH, C₆₋₂₀-Aryl oder C₇₋₂₀-Arylalkyl bedeuten, polymerisiert.

2. Verfahren nach Anspruch 1, **dadurch gekennzeichnet, dass** die Epoxide ausgewählt sind aus Verbindungen der allgemeinen Formel (I) oder deren Mischungen 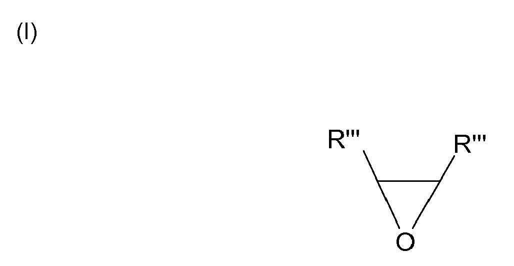 mit der Bedeutung
R'" jeweils unabhängig Aryl, -O-C₁₋₂₀-Alkyl, Kohlenwasserstoffrest mit einem Zahlenmittel des Molekulargewichts von 150 bis 20000 oder -CH₂-R", wobei einer der Reste R"' auch H bedeuten kann und beide Reste R"' gemeinsam einen C₃₋₆-Alkylenrest bilden können,
R" Cl, Methacrylato, Aryl, Kohlenwasserstoffrest mit einem Zahlenmittel des Molekulargewichts von 150 bis 20000, O-C₁₋₂₀-Alkyl, das durch 1 bis 6 nicht benachbarte Sauerstoffatome unterbrochen sein kann, (OEt)ₓ-OR' oder (OPr)ₓ-OR' mit Et Ethylen, Pr Propylen, x mittlerer Wert von 1 bis 20, R' H oder C₁₋₂₀-Alkyl.

3. Verfahren nach den Ansprüchen 1 bis 2, **dadurch gekennzeichnet, dass** die Comonomere ausgewählt sind aus Ethylenoxid, Propylenoxid, (Meth)acrylaten, Vinylpyridin, Styrol, α-Methylstyrol, Butadien, Isopren oder deren Mischungen.

4. Verfahren nach den Ansprüchen 1 bis 3, **dadurch gekennzeichnet, dass** die quartäre Ammonium- oder Phosphoniumverbindung die Formel NR₄-X oder PR₄-X aufweist, wobei R gleiches oder verschiedenes Alkyl mit 1 bis 10 C-Atomen, und X Halogen, OH oder ein Alkoholatrest mit 1 bis 10 C-Atomen, bedeuten.

5. Verfahren nach den Ansprüchen 1 bis 4, **dadurch gekennzeichnet, dass** als Aluminiumorganyl Aluminiumtrialkyle verwendet werden.

6. Verfahren nach den Ansprüchen 1 bis 5, **dadurch gekennzeichnet, dass** das Molverhältnis von Aluminiumorganyl zu quartärer Ammonium- oder Phosphoniumverbindung, gerechnet als Aluminiumatome zu Stickstoff- oder Phosphoratomen, 1,1:1 bis 100:1 beträgt.

7. Verfahren nach den Ansprüchen 1 bis 6, **dadurch gekennzeichnet, dass** die Alkalimetallverbindung ausgewählt ist aus Alkoholaten, Hydriden, Hydroxiden, Amiden, Carboxylen, Arylen, Arylalkylen und Alkylen der Alkalimetalle, oder deren Mischungen.

8. Verfahren nach den Ansprüchen 1 bis 7, **dadurch gekennzeichnet, dass** es sich bei den Copolymeren um Blockcopolymere handelt, wobei durch sequentielle Polymerisation zunächst das Comonomer zu einem Polymerblock B polymerisiert wird, und danach das Epoxid oder Oxetan zu einem Polyepoxidblock oder Polyoxetanblock A polymerisiert wird.

9. Mono- oder Copolymer, erhältlich nach einem Verfahren nach den Ansprüchen 1 bis 8.

10. Mono- oder Copolymer, das von Ethylenoxid und Propylenoxid verschiedene polymerisierte Grundbausteine der allgemeinen Formel (I) gemäß Anspruch 2 oder Oxetane enthält und vorzugsweise ein Zahlenmittel des Molekulargewichts von mindestens 10.000 aufweist.
